# FASCICULE DE BREVET EUROPEEN

(11) **EP 1 095 485 B1**
(45) Date de publication et mention de la délivrance du brevet: **08.02.2006**
(21) Numéro de dépôt: 99929402.8
(22) Date de dépôt: 05.07.1999
(51) Int. Cl.: H04L 12/28, H04B 7/185

(54) **SYSTEME MOBILE DE RESEAU POUR RACCORDEMENT TEMPORAIRE A UN SYSTEME D'INFORMATION FIXE**
MOBILES NETZWERKSYSTEM ZUM ZEITWEISEN VERBINDEN MIT EINEM FESTEN INFORMATIONSSYSTEM
NETWORK MOBILE SYSTEM FOR TEMPORARY CONNECTION TO FIXED INFORMATION SYSTEM

(30) Priorité: 07.07.1998 FR 9808675
(43) Date de publication de la demande: 02.05.2001
(73) Titulaire: FRANCE TELECOM, 75015 Paris (FR)
(72) Inventeur: MEREAU, Anne, F-78330 Fontenay le Fleury (FR); MAUCCI, Franck, F-06340 La Trinité (FR); JOLLIVET, Sandrine, F-75014 Paris (FR); CULLEN, Cionaith, F-75015 Paris (FR)
(74) Mandataire: Fréchède, Michel
(86) Numéro de dépôt international: PCT/FR1999/001617
(87) Numéro de publication internationale: WO 2000/002352

(56) Documents cités:
- WO-A-95/34958
- WO-A-98/12832
- US-A- 5 280 625
- ELBERSE A: "DECT: THE IDEAL TELEWORK ACCESS TECHNOLOGY" IEE COLLOQUIUM ON TELEWORKING AND TELECONFERENCING, 1 janvier 1994 (1994-01-01), pages 7/01-7/09, XP000541902

## Description

L'invention concerne un système mobile de réseau pour raccordement temporaire à un système d'information fixe.

La multiplication des prestations de services, grâce à la mise en oeuvre de moyens informatiques connectés à demeure à un système d'information fixe, a récemment fait apparaître le besoin de la fourniture de telles prestations de services, en particulier dans le cas de situations ponctuelles, épisodiques ou événementielles dans lesquelles l'accès à un système d'information distant, public ou privé, ne peut facilement être assuré.

Ce type de besoin apparaît en particulier dans le domaine du secteur d'activité économique tertiaire, tel que le secteur bancaire, le secteur des assurances ou de la distribution dans lesquels il est nécessaire d'effectuer des prestations de services itinérantes, ou tournées auprès de la clientèle délocalisée, de telles prestations devant être identiques à celles offertes par une unité prestataire de services centralisée par l'intermédiaire d'un réseau et d'un système d'information fixes. Le système mobile de réseau (SMR) pour raccordement temporaire s'avère ainsi être une solution adaptée à un besoin de raccordement ponctuel, épisodique ou événementiel, dans lequel une pluralité d'acteurs sont amenés à échanger des informations relatives à leurs activités avec différents systèmes d'information fixes.

A l'heure actuelle, la satisfaction d'un tel type de besoin n'est résolue que partiellement.

Une première solution est désignée par la notion de bureau mobile. Cette solution permet à un ordinateur personnel ou à un terminal mobile munis de fonctions de télécommunications par voie radio, telles que transmission de données, télécopie, de recevoir et de transmettre vers un autre terminal ou réseau toute information ou donnée correspondantes.

La configuration matérielle du bureau mobile est constituée par exemple d'un ordinateur personnel muni d'un port PCMCIA et d'une carte modem au format PCMCIA type II raccordée à un terminal mobile. Une telle configuration offre la mobilité à son utilisateur mais ne permet en aucun cas l'établissement d'une diversité d'accès multi-utilisateurs pour un point d'accès donné. En d'autres termes, une telle configuration permet la mise en oeuvre d'un accès au plus à un réseau fixe.

Une deuxième solution consiste à réaliser un raccordement fixe d'un réseau local au système d'information distant. Dans un tel cas, ce raccordement est réalisé par l'intermédiaire de réseaux fixes, publics ou privés, tels que les réseaux de transmission de données, les réseaux numériques à intégration de services (RNIS), les réseaux téléphoniques commutés (RTC) par exemple ou par l'intermédiaire de liaisons spécialisées (LS).

Un tel raccordement distant d'un réseau local est effectué par l'intermédiaire de réseaux fixes et n'offre en conséquence aucune mobilité à ses utilisateurs.

La présente invention a pour objet de remédier aux inconvénients des solutions de l'art antérieur précitées, en vue de fournir une solution d'extension mobile de réseau au système d'information.

En effet, l'objet de la présente invention est la mise en oeuvre d'un système mobile de réseau ci-après désigné système mobile de réseau, pour un raccordement temporaire à un système d'information fixe.

Un autre objet de la présente invention est en particulier la mise en oeuvre d'un système mobile de réseau présentant un caractère de modularité, ce système mobile de réseau pouvant être connecté ou déconnecté de tout réseau fixe informatique, ou encore déplacé dans ce dernier, déconnecté ou déplacé dans un réseau de télécommunications fixe.

Un autre objet de la présente invention est la mise en oeuvre d'un mode de raccordement d'un système mobile de réseau à un système d'information fixe de façon à constituer une solution intégrée en terme de gestion et d'administration de réseau, du point de vue du gestionnaire de ce réseau mobile et en terme d'utilisation, l'environnement de l'utilisateur final du système mobile de réseau, selon l'invention, étant identique à celui de l'utilisateur d'un réseau local raccordé par l'intermédiaire de réseaux fixes de type réseau privé d'entreprise.

Un autre objet de la présente invention est également la mise en oeuvre d'un système mobile de réseau présentant une grande souplesse d'adaptation, grâce, d'une part, à l'utilisation d'un support de transmission radio, lequel permet d'offrir rapidement le service du système mobile de réseau dans des sites non urbanisés, et, d'autre part, l'extension en diversité d'équipements embarqués constitutifs de ce système mobile de réseau.

Le système mobile de réseau pour raccordement temporaire à un système d'information fixe, muni de points d'accès physiques, objet de la présente invention, est énoncé à la revendication 1 ci-après.

On connaît par le document WO 98 12832 un système de ce type. Toutefois, le système embarqué, décrit dans ce document, ne comporte pas de routeur, alors que le fait de prévoir cet élément, dans le système embarqué au sens de l'invention, offre à celui-ci une totale autonomie en situation de mobilité.

Le système mobile de réseau, objet de la présente invention, trouve application à la mise en oeuvre, à l'extension de tout type de réseau informatique fixe, quel que soit le protocole d'échanges de données utilisé par ce dernier.

D'une manière générale, on indique que le système mobile de réseau, selon l'invention, permet à un utilisateur d'échanger depuis le système mobile de réseau précité des données en temps réel avec le système d'information du service auquel cet utilisateur a habilitation d'accès.

Il sera mieux compris à la lecture de la description et à l'observation des dessins inclus à seul titre d'exemple et dans lesquels :

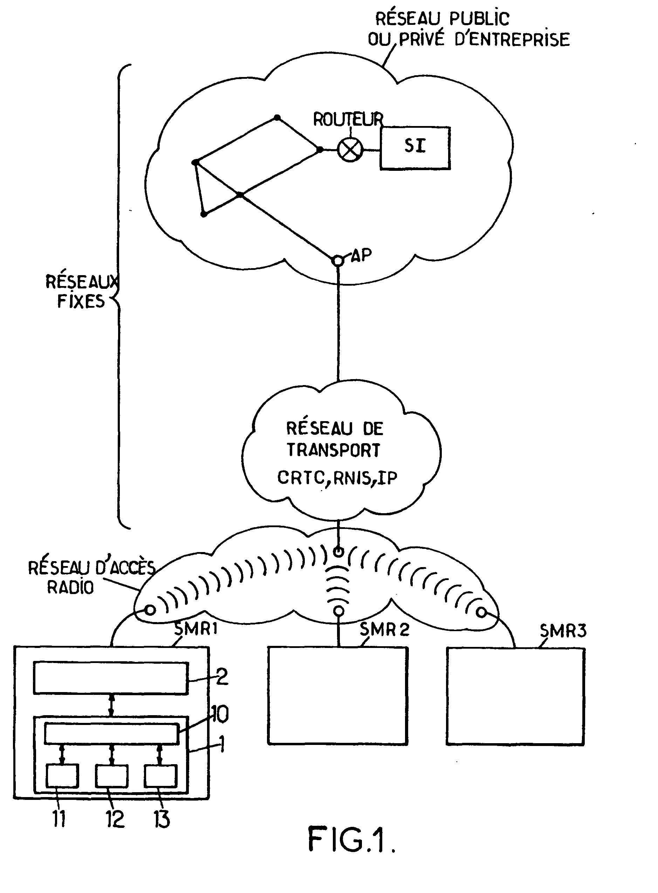

- la figure 1 représente un schéma synoptique d'un système mobile de réseau conforme à l'objet de la présente invention, et la liaison de ce dernier à un système d'information fixe par l'intermédiaire d'un réseau de transport constitué d'un réseau de télécommunication analogique (RTC) ou numérique (RNIS) public ou privé, ou de transmission de données (X25, ATM, IP, ...) ou encore de liaisons spécialisées, d'une part, et par l'intermédiaire d'un réseau d'accès constitué d'un système de communication par voie radio d'autre part ;

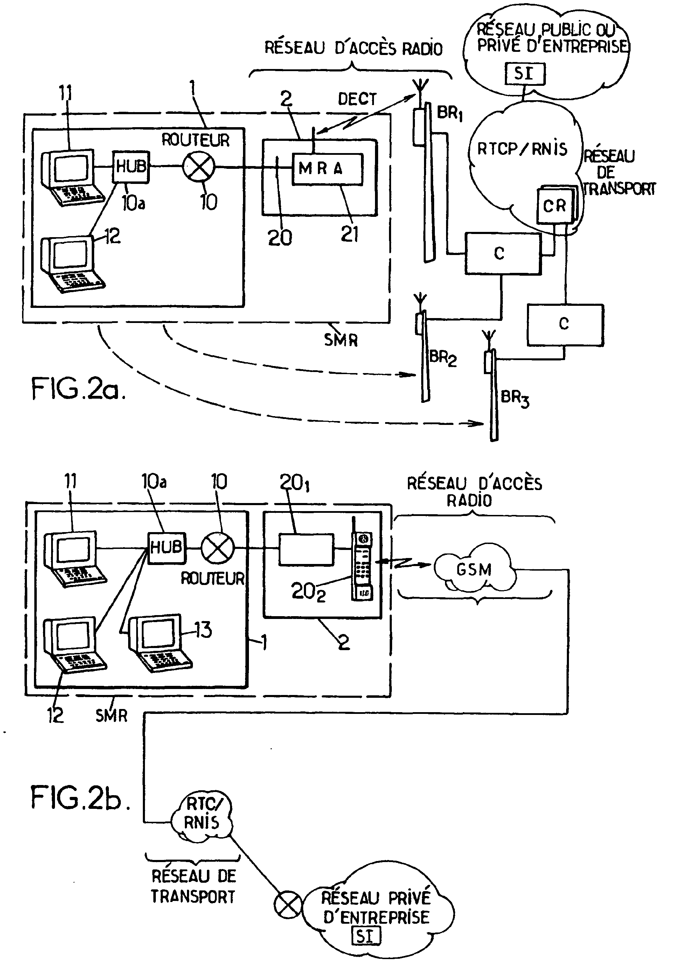

- la figure 2a représente un premier mode de réalisation du système mobile de réseau, objet de l'invention, dans lequel le système de communication par voie radio constituant le réseau d'accès par voie radio précité est un système d'accès radio de type "sans fil" *(cordless* en anglais) conforme à la norme DECT de l'ETSI ;
- la figure 2b représente un deuxième mode de réalisation non limitatif du système mobile de réseau, objet de l'invention, dans lequel le réseau d'accès par voie radio est du type réseau de radiocommunication cellulaire quelconque : de *"deuxième génération"* (par exemple de type IS-95, PDC, GSM) ou de *"troisième génération"* (norme IMT-2000 de l'UIT ou UMTS de l'ETSI;

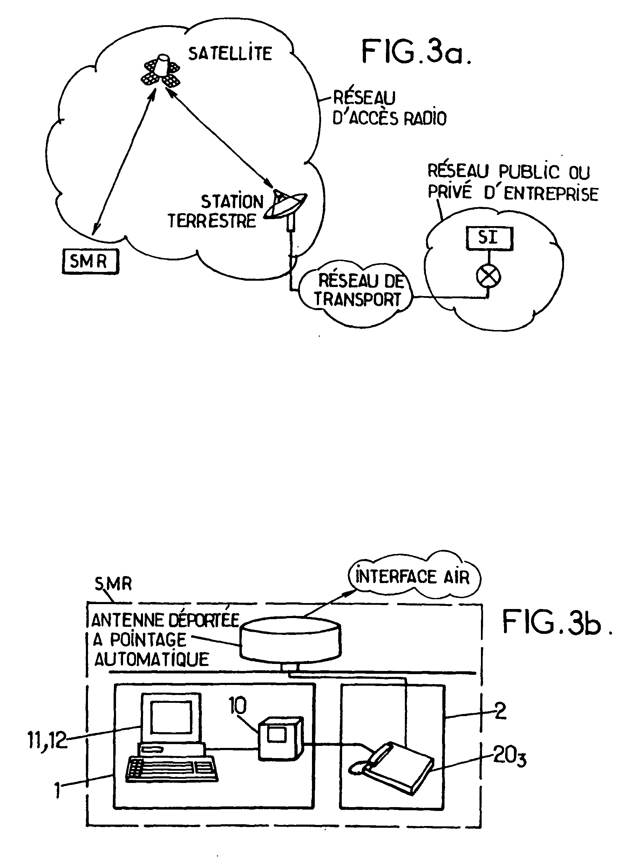

- la figure 3a représente un troisième mode de réalisation non limitatif du système mobile de réseau, objet de l'invention, dans lequel le réseau d'accès par voie radio est du type satellite ou réseau satellitaire ;
- la figure 3b décrit le système mobile de réseau, objet de l'invention, selon troisième mode de réalisation proposé, dans lequel un terminal mobile satellite est utilisé.

Une description plus détaillée d'un système mobile de réseau pour raccordement temporaire à un système d'information fixe, conforme à l'objet de la présente invention, sera maintenant donnée en liaison avec la figure 1.

Ainsi que représenté sur la figure précitée, le système d'information fixe, noté SI, est un système d'information dont le support pourra être par exemple un réseau local d'entreprise. D'autre part, le réseau support du système d'information est muni de points d'accès physiques, notés AP sur la figure 1, ces points d'accès physiques permettant l'accès au système d'information fixe SI, à partir d'un réseau de transport.

En particulier, le système de réseau embarqué 1 comprend, ainsi que représenté sur la figure 1, un routeur 10 gérant un réseau local sur lequel sont connectés au moins un serveur, portant la référence 11, et une ou plusieurs stations de travail, référencées 12-13, munis d'éléments périphériques afin de permettre la création, l'envoi, la réception et la lecture de messages d'information.

Les modes d'accès par voie radio du système mobile SMR de réseau, objet de l'invention, du système d'information SI fixe, sont indépendants de l'architecture interne du réseau embarqué qui pourra comprendre une ou plusieurs stations de travail et un ou plusieurs serveurs raccordés au routeur.

Dans un mode de réalisation particulier avantageux, non limitatif, on indique que le réseau local géré par le routeur 10 peut être constitué par un réseau de type *ETHERNET* en raison de la souplesse de mise en oeuvre de ce type de réseau.

En outre, ainsi que représenté de même sur la figure 1, le système mobile de réseau, objet de la présente invention, comprend une station mobile d'abonné 2 permettant des communications bidirectionnelles permettant d'assurer l'interconnexion de ce système de réseau embarqué 1 à au moins un point d'accès physique AP du réseau local d'entreprise support du système d'information SI, afin d'assurer l'échange des messages d'information entre le système de réseau embarqué 1 et le système d'information fixe SI, par l'intermédiaire du réseau d'accès par voie radio, RESEAU D'ACCES RADIO, et du réseau de transport.

D'une manière générale, on indique que le réseau d'accès constitué par le système de communication par voie radio peut être mis en oeuvre selon différentes réalisations techniques fondées sur des technologies radio distinctes, telles notamment les systèmes d'accès radio sans fil de type PHS, PACS ou DECT, des réseaux de radiocommunication cellulaires, par exemple de type IS-95, GSM / DCS, PCS, IMT-2000 ou UMTS, ou encore par l'intermédiaire d'un satellite ou d'un réseau satellitaire, ainsi qu'il sera décrit ci-après dans la description.

Les critères de choix entre les différentes solutions mises en oeuvre précitées sont basés sur des considérations de couverture de ces systèmes de communication par voie radio, de qualité de service, de coût et de degré de mobilité requis, le degré de mobilité pouvant être défini comme la mobilité en déplacement, lorsque l'échange des messages d'information peut être effectué pendant le déplacement du système mobile de réseau, objet de la présente invention, ou en situation de mobilité discrète, ce même échange de messages d'information n'étant alors effectué que lors de l'arrêt du système mobile de réseau précité.

Un premier mode de réalisation d'un système mobile de réseau conforme à l'objet de la présente invention, dans le cas où le système de communication par voie radio 2 est constitué par un réseau d'accès DECT sera maintenant décrit en liaison avec la figure 2a.

Sur la figure précitée, on rappelle que le serveur 11 et la station de travail 12 peuvent être interconnectés au routeur 10 par l'intermédiaire d'un circuit 10a de type "*hub*" en langage anglo-saxon, de manière classique. On rappelle également que le serveur 11 peut être intégré à l'une des stations de travail de manière non limitative.

En outre, ainsi que représenté sur la même figure 2a, le réseau d'accès radio DECT comporte au moins, au niveau du système mobile de réseau, un port de transmission de données 20, auquel est connecté le routeur 10, et un module radio d'abonné, noté MRA, référencé 21, réalisant une interface entre le port de transmission de données 20 et le réseau d'accès radio DECT. Le module radio d'abonné 21 est muni d'une antenne permettant l'émission - réception des signaux DECT.

D'une manière pratique, on indique que le port de transmission de données 20 peut par exemple être constitué par un port de données du type V.24 et que le module radio abonné MRA 21 est conforme aux exigences de la norme DECT.

En outre, le réseau d'accès radio DECT comprend, afin d'assurer une interface entre le module radio d'abonné 21 et un réseau de transport, une pluralité de bornes radio fixes, notées BR₁ à BR₃ de manière non limitative sur la figure 2a. Chaque borne BR₁ à BR₃ est connectée à au moins un commutateur C raccordé à un commutateur de rattachement CR du réseau de transport, ainsi que représenté sur la figure 2a.

Selon le mode de réalisation décrit en figure 2a, le réseau de transport fixe est un réseau de télécommunications public ou privé, analogique ou numérique (par exemple le RTC ou le RNIS) qui comprend au moins un commutateur de rattachement CR auquel est raccordé chacun des concentrateurs du réseau d'accès DECT, un réseau de transmission de données ou un réseau de liaisons spécialisées assurant la liaison au système d'information fixe SI de chaque système central précité.

En ce qui concerne les spécifications du réseau d'accès radio DECT, on indique que la technologie mise en oeuvre est une technologie sans fil qui possède à l'heure actuelle des applications multiples : téléphonie sans fil, PABX sans fil pour des applications de mobilité en environnement d'entreprise, systèmes de radio dans la boucle locale désignés par RBL et applications de type CTM pour des applications de mobilité en environnement public. Dans l'hypothèse ou la technologie DECT est utilisée pour la réalisation du SMR, différentes mises en oeuvre sont réalisables selon le besoin à couvrir. A titre d'exemple, un système de type RBL pourra être plus intéressant en terme de coût d'infrastructure notamment, lorsque les connexions sont systématiquement initiées par le SMR (pas de fonctions de localisation nécessaires) ; il pourra éventuellement gérer la fonction de mobilité au sein d'un même système central. Un système CTL est capable en revanche de gérer la fonction de mobilité entre différents concentrateurs, par le biais de mécanismes de localisation du réseau intelligent du réseau de transport fixe, et sera par conséquent plus adapté lorsque les connexions sont établies indifféremment par le système d'information SI ou le réseau embarqué. Ces systèmes restent de toutes façons plus particulièrement adaptés aux applications de type réseau local *ETHERNET* embarqué caractérisées par un besoin de mobilité discrète, dans lesquelles les communications ont lieu essentiellement à l'arrêt du système de réseau mobile ou lors d'un déplacement de ce dernier, limité à la vitesse d'un piéton par exemple.

Lors de la mise en oeuvre d'un réseau d'accès radio de type DECT tel que représenté en figure 2a, celui-ci est en fait composé, en référence à la norme ETSI DECT :
- d'un concentrateur en charge des fonctions de concentration et de commutation du trafic dans le réseau d'accès DECT ainsi que de la fonction d'allocation de ressource radio entre les différentes communications. Ce système central gère également la mobilité entre les différentes bornes radio, telles que les bornes BR₁ à BR₃ qui lui sont rattachées. Chaque concentrateur est représenté sur la figure 2a et raccordé au commutateur de rattachement précédemment mentionné ;
- des bornes radio précitées, lesquelles assurent le raccordement des modules radio d'abonné 21 via l'interface DECT ainsi constituée ;
- des MRA 21 précités assurant en fait l'interface entre le port série 20, auquel est connecté le routeur 10, et l'interface radio DECT.

Dans le mode de réalisation représenté en figure 2a, c'est un système RBL qui est mis en oeuvre. La connexion établie entre le système mobile de réseau SMR et le système d'information fixe SI est alors totalement numérique, pourvu que le réseau de transport soit également numérique.

La mise en oeuvre d'un réseau d'accès radio DECT dans le premier mode de réalisation tel que représenté en figure 2a permet, selon l'acceptation de la norme ETSI actuelle :
- une mobilité limitée à la zone de couverture d'un ou plusieurs réseaux d'accès radio DECT ;
- du point de vue matériel, le raccordement du réseau embarqué, en particulier du routeur au MRA, de façon analogue à la connexion d'un LAN à un modem analogique, permettant l'accès au système d'information SI distant raccordé de manière classique au réseau de transport. Le routeur 10 du système de réseau embarqué 1 gère par conséquent les fonctions de traitement d'appels et la transmission des données vers le système d'information SI.

D'une manière générale, le réseau d'accès radio DECT fournit uniquement ce réseau d'accès à l'exclusion d'une infrastructure de réseau globale. En conséquence, lorsque l'application nécessite l'établissement de connexions à l'initiative du SI vers le SMR, les mécanismes d'adressage et de localisation du système mobile de réseau SMR doivent être adaptés. Avantageusement, si l'on veut rendre l'utilisation du système mobile de réseau SMR transparente du point de vue de l'utilisateur, il conviendra d'affecter au SMR un seul numéro d'annuaire à partir duquel il pourra être appelé. Ce numéro unique est alors traité de façon transparente par un même et unique réseau d'accès radio DECT. Lorsque le système mobile de réseau SMR se déplace entre grappes de bornes radio DECT disjointes, la localisation est alors gérée par le réseau de transport fixe sur la base de mécanismes spécifiques, tels que les renvois d'appels, ou encore par le réseau privé d'entreprise par l'intermédiaire d'un processus spécifique permettant d'identifier le numéro d'annuaire à composer selon la position effective du système mobile de réseau SMR.

Enfin, l'introduction d'une liaison radio DECT dans la chaîne de transmission introduit des délais dus au lien radio. Il convient en conséquence de prendre en compte ces délais lors du paramétrage du routeur 10 du système mobile de réseau SMR.

Une description plus détaillée d'un deuxième mode de réalisation du système mobile de réseau, objet de la présente invention, sera maintenant donnée en liaison avec la figure 2b.

Dans le deuxième mode de réalisation précité, d'une manière avantageuse, le réseau d'accès radio est du type système de radiocommunications cellulaires notamment, mais non exclusivement, réseau de type GSM. Bien que la description de la figure 2b soit limitée à un réseau de type GSM, le système mobile de réseau, objet de la présente invention, peut être mis en oeuvre grâce à tous types de systèmes de radiocommunications cellulaires de deuxième génération, comme le GSM/DCS, PCS ou IS-95, ou de troisième génération : IMT-2000, UMTS.

Toutefois, on indique que l'infrastructure de réseau étendue du réseau de radiocommunication GSM ainsi que les fonctions de gestion et de mobilité assurées par ledit réseau GSM en font une structure particulièrement adaptée à la mise en oeuvre du système mobile de réseau, objet de la présente invention, pour des applications terrestres pour lesquelles le raccordement en mobilité est possible pour toute vitesse de déplacement du dispositif porteur du système mobile de réseaux.

Dans le deuxième mode de réalisation du système mobile de réseau, objet de la présente invention, tel que représenté en figure 2b, on retrouve, ainsi que représenté sur la figure précitée, un système de réseau embarqué 1, lequel, de la même manière que dans le cas de la figure 2a, comprend un routeur 10 auquel est connecté un serveur 11 et plusieurs stations de travail 12, 13 par exemple, par l'intermédiaire d'un circuit 10a de type "*hub*". Le système de réseau embarqué 1 joue bien entendu le même rôle et la même fonction que dans le cas du premier mode de réalisation de la figure 2a, dans lequel le réseau d'accès radio est un réseau DECT.

De manière plus spécifique, le système mobile de réseau comprend un système d'interconnexion composé d'un modem cellulaire, portant la référence 20₁, connecté au routeur 10, et d'un terminal mobile cellulaire, portant la référence 20₂, connecté au modem 20₁.

Dans le mode de réalisation décrit en figure 2b, le réseau d'accès par voie radio est, de manière non limitative, un système de radiocommunication cellulaire GSM assurant l'interface entre le terminal mobile 20₂ et un réseau de transport constitué par exemple par le réseau numérique à intégration de services RNIS assurant la liaison avec le système d'information fixe. Le réseau GSM sur lequel s'appuie cette réalisation est conforme aux exigences de la norme ETSI GSM.

Le système mobile de réseau SMR, objet de la présente invention, représenté en figure 2b dans son deuxième mode de réalisation, utilise le service support transmission de données de la norme GSM.

Le réseau de radiocommunication GSM offre deux types d'interconnexion au réseau fixe (dans le présent exposé, le réseau de transport) via des modems analogiques ou via des adaptateurs RNIS. Ainsi, selon la nature du raccordement du routeur du réseau local fixe, au réseau de transport RTC ou RNIS, l'un ou l'autre de ces deux modes de transmission sera mis en oeuvre. Il est toutefois recommandé d'utiliser le mode d'interconnexion UDI pour bénéficier du mode numérique de transmission de bout en bout de la chaîne de transmission.

En outre, le service de radiocommunication GSM est susceptible de gérer deux modes de transmission de données : un mode sans correction d'erreurs et à débit constant, dit *mode transparent,* et un mode avec correction d'erreurs et à débit variable, dit *mode non transparent.* En tout état de cause, ces deux modes de transmission peuvent être mis en oeuvre afin d'assurer la liaison d'un système mobile de réseau SMR conforme à l'objet de la présente invention à un système d'information fixe SI. On indique toutefois que le mode non transparent permet de maintenir un taux d'erreur résiduel nul ou proche de zéro. En fait, le choix du mode de transmission dépend de l'application mise en oeuvre, selon que cette application est plus sensible aux délais qu'aux erreurs, ou réciproquement.

De plus, le routeur 10, d'une part, abrite un réseau local embarqué 1, et d'autre part, assure la fonction d'interface entre le réseau local embarqué précité, par exemple de type *ETHERNET,* et l'environnement extérieur.

Le modem cellulaire 20₁ connecté au routeur peut alors être réalisé sur une carte d'adaptation GSM au format PCMCIA.

En mode opératoire, le routeur 10 contrôle le modem cellulaire 20₁ pour permettre l'établissement ou le relâchement d'une connexion et la transmission des données. Pour cette raison, le routeur 10 comprend de façon non limitative un jeu de commandes dites commandes HAYES, complétées de paramètres ou de commandes spécifiques à l'environnement GSM, définies dans les spécifications GSM de l'ETSI.

On indique que la communication entre le système mobile de réseau SMR, objet de la présente invention, et le routeur du réseau fixe principal peut être assurée par l'établissement d'une connexion par exemple de type PPP, le protocole PPP permettant de transporter les paquets au format IP entre le système mobile de réseau SMR et le réseau local fixe support du système d'information SI représenté en figure 2b par l'intermédiaire du réseau de transport.

Au niveau applicatif, la communication de bout en bout entre deux stations de travail, l'une d'elles étant située au niveau du système mobile de réseau SMR, objet de la présente invention, et l'autre étant située au niveau du réseau local distant fixe support du système d'information peut, selon l'application, être effectué sur la base d'une connexion de type TCP ou UDP, ces types de connexion permettant en effet un transfert de données bidirectionnel simultané. Les données d'application concerneront les services rendus par le prestataire de services, c'est-à-dire des services bancaires, d'échange d'informations diverses ou autres services.

On indique que la gestion des connexions de type PPP et TCP dépend des spécificités et contraintes de la transmission GSM. Un choix correspondant des paramètres PPP et TCP permet de tenir compte de ces spécificités, en particulier relativement aux délais introduits par le lien radio, ce choix des paramètres permettant ainsi d'optimiser la qualité du service rendu.

Enfin, comme dans le mode de réalisation précédemment exposé, le réseau de transport assurant l'interconnexion du réseau d'accès par voie radio et le réseau fixe, par exemple réseau d'entreprise, support du système d'information fixe SI, est constitué par exemple d'un réseau de télécommunication analogique de type RTC ou numérique (RNIS), ou d'un réseau de transmission de données ou encore d'un réseau de liaisons spécialisées LS.

Une description plus détaillée d'un troisième mode de réalisation du système mobile de réseau SMR, objet de la présente invention, sera maintenant donnée en liaison avec les figures 3a et 3b, dans le cas où le système de communication par voie radio est constitué par une liaison avec un satellite ou un réseau de satellites.

Dans ce mode de réalisation, ainsi que représenté en particulier en figures 3a et 3b, le système mobile de réseau SMR comporte, de la même manière que dans les premier et deuxième modes de réalisation, un système de réseau embarqué 1 comprenant un routeur 10, au moins un serveur 11 et au moins une station de travail 12.

Sur la figure 3b précitée, le serveur 11 a été représenté intégré à la station de travail 12, de manière non limitative, afin de ne pas surcharger le dessin. D'autres configurations du réseau local géré par le routeur 10 peuvent bien entendu être envisagées.

Le système mobile de réseau SMR, objet de la présente invention, comporte en outre, un terminal mobile satellite, portant la référence 20₃ sur la figure 3b, connecté au routeur 10. Sur la figure 3b précitée, un aérien ou antenne est connecté au terminal mobile satellite 20₃.

Ainsi que représenté de manière plus schématique en figure 3a, l'antenne précitée est pointée vers un ou plusieurs satellites assurant la liaison satellitaire vers une station terrienne d'émission/réception appartenant audit système satellitaire, elle-même raccordée au système d'information SI fixe par l'intermédiaire d'un réseau de transport, par exemple le réseau téléphonique commuté RTC ou le réseau à intégration de service RNIS ou tout réseau de transmission de données, ou encore un réseau de liaisons spécialisées.

La liaison entre le système mobile de réseau SMR, objet de la présente invention, dans le mode de réalisation des figures 3a et 3b, et la station terrienne via le satellite (ou les satellites) est désignée par interface air. Ce type d'interface ne sera pas décrit en détail car il correspond à un système de transmission de données de l'art antérieur connu en tant que tel. La station terrienne d'émission/réception et le (ou les) satellite constituent le réseau d'accès par voie radio de ce troisième mode de réalisation.

Dans un mode de réalisation particulier, le terminal mobile satellite 20₃ tel que représenté en figure 3b correspond, de façon non limitative, à une station ou terminal mobile satellite *INMARSAT-PHONE.* Toutefois, d'autres terminaux mobiles satellite ou d'autres systèmes satellitaires que celui d'*INMARSAT* peuvent être envisagés, de type géostationnaires ou non.

De manière plus spécifique, selon le mode de réalisation représenté en figure 3b, le système mobile de réseau SMR comprend un système d'interconnexion par voie radio comprenant un terminal mobile satellite *INMARSAT-PHONE* connecté au routeur et assurant l'interconnexion avec le satellite.

La communication entre le système mobile de réseau SMR et le routeur distant gérant le réseau local fixe support du système d'information SI peut être assurée par l'établissement d'une connexion par exemple du type PPP précité.

La gestion de la mobilité du terminal mobile satellite est effectuée par le système satellitaire, généralement au niveau des stations terriennes du système satellitaire, permettant ainsi l'établissement de la communication entre la station terrienne et le terminal mobile satellite, ladite station terrienne pouvant se raccorder au réseau local fixe support du système d'information par l'intermédiaire d'un réseau de transport, tel qu'un réseau de télécommunications commuté analogique ou numérique, un réseau de liaisons spécialisées, un réseau de transmission de données ou un réseau propriétaire.

De manière analogue au premier et au deuxième mode de réalisation dans lequel le système de communication par voie radio est effectué par l'intermédiaire d'un réseau d'accès radio DECT, respectivement GSM, l'introduction d'une liaison satellitaire dans la chaîne de transmission entre le système mobile de réseau SMR, objet de la présente invention, introduit de fait des délais dans l'établissement de la connexion et lors des transferts d'informations entre le SMR et le SI qui devront être pris en compte notamment dans le paramétrage du routeur embarqué 10, permettant d'assurer la gestion du réseau local embarqué, et du routeur distant du réseau local fixe support du système d'information SI précité.

Par ailleurs, la plupart des systèmes de liaison par satellite disposent d'une option de chiffrement utilisable directement par le terminal mobile satellite précité. Dans un tel cas, le système mobile de réseau SMR, objet de la présente invention, s'adjoint donc une telle possibilité de chiffrement de l'information sur la liaison ainsi établie lorsque la transmission est en mode numérique de bout en bout, par exemple au moyen du mode d'interconnexion UDI précédemment mentionné dans la description.

Enfin, pour certaines configurations satellitaires, il pourra être envisagé de localiser le système d'information SI du réseau privé d'entreprise dans la station terrestre, ce qui permettra, avantageusement dans certaines applications, de raccourcir la chaîne de transmission entre le système mobile de réseau et le système d'information.

Avantageusement, il peut être envisagé une mise en oeuvre du système mobile de réseau SMR combinant deux des modes de réalisation décrits ci-dessus - et même trois modes - à condition que le routeur du SMR possède les ports de sortie adaptés.

Un glossaire de l'ensemble des sigles ou abréviations utilisé dans le domaine technique est introduit ci-après, l'astérisque indiquant la mention de l'expression correspondante en langage anglo-saxon.

### GLOSSAIRE

- * OSI: Open Systems Interconnection
- * DECT: Digital Enhanced Cordless Telecommunication
- * PACS: Personal Access Communication System
- * PHS: Personal Handy System
- * PCS: Personal Communication System
- * GSM: Global System for Mobile communications
- * DCS: Digital Communication System
- * CTM: Cordless Terminal Mobility
- RBL: [Système] Radio dans la Boucle Locale
- RTC: Réseau Téléphonique Commuté
- RNIS: Réseau Numérique à Intégration de Services
- * PABX: Private Automatic Branch Exchange
- LS: Liaisons Spécialisées
- * ATM: Asynchronous Transmission Mode
- MRA: Module Radio d'Abonné
- * IP: Internet Protocol
- * TCP: Transmission Control Protocol
- * PAP: Password Authentication Protocol
- * PPP: Point to Point Protocol
- * CHAP: Challenge Authentication Protocol
- * IMT-2000: International Mobile Telecommunication-2000
- * UMTS: Universal Mobile Telecommunication Services
- UIT: Union Internationale des Telecommunications
- * ETSI: European Telecommunication Standard Institute
- * IS-95: Interim Standard - 95
- * LAN: Local Area Network
- * PDC: Personal Digital Cellular

- * PCMCIA: Personal Computer Memory Card International Association
- * UDI: Unrestricted Digital Information
- * UDP: User Datagram Protocol.

## Revendications

1. Système mobile de réseau pour raccordement temporaire à un système d'information (Si) fixe d'un réseau public ou d'un réseau privé d'entreprise, muni de points d'accès physiques (AP), le système mobile de réseau comprenant au moins :
■ un système de réseau embarqué (SMR) ;
■ des moyens d'émission/réception radioélectriques (2) permettant audit système de réseau embarqué d'établir une communication avec un réseau d'accès par voie radio lui-même interconnecté à un réseau de transport fixe public ou privé, permettant audit système de réseau embarqué de se connecter à au moins un point d'accès physique dudit système d'information et d'assurer l'échange desdits messages d'information entre ledit système de réseau embarqué et ledit système d'information fixe ; et
■ des moyens d'interfaçage entre ledit système de réseau embarqué et lesdits moyens d'émission/réception radioélectriques,
**caractérisé en ce que** le système de réseau embarqué comporte un routeur (10) gérant un réseau local sur lequel sont connectés au moins un serveur (11) et au moins une station de travail (12) munis de leurs éléments périphériques permettant la création, l'envoi, la réception et la lecture de messages d'information.

2. Système selon la revendication 1, **caractérisé en ce que**, lesdits moyens d'émission/réception radioélectriques comportent un module radio permettant la connexion dudit système mobile de réseau à un réseau d'accès par voie radio constitué par un réseau de radiocommunication de technologie sans fil et lesdits de technologie sans fil et lesdits moyens d'interfaçage d'émission/réception radioélectriques comportent un port de transmission de données.

3. Système selon l'une des revendications 1 et 2, **caractérisé en ce que**, lesdits moyens d'émission/réception radioélectriques comportent un terminal mobile cellulaire (20₂) permettant la connexion dudit système mobile de réseau à un réseau d'accès par voie radio constitué par un système de radiocommunication mobile cellulaire, et les moyens d'interfaçage entre le réseau embarqué et les moyens d'émission/réception radioélectriques comportent un modem cellulaire (20₁) connecté audit routeur.

4. Système selon l'une des revendications 1, 2 et 3, **caractérisé en ce que** lesdits moyens d'émission/réception radioélectriques comportent un terminal mobile satellite permettant la connexion à un réseau d'accès par voie radio constitué par une liaison avec au moins un satellite et lesdits moyens d'interfaçage avec le réseau embarqué comportent un port série de sortie.

5. Utilisation du système mobile de réseau selon l'une des revendications 1 à 4, pour le raccordement temporaire à un système d'information fixe d'un réseau public ou d'un réseau privé d'entreprise.

## Patentansprüche

1. Mobiles Netzwerksystem zum zeitweiligen Anschließen an ein festes Informationssystem (Si) eines öffentlichen oder eines privaten Firmennetzwerkes, das mit physischen Zugangspunkten ausgestattet ist, wobei das mobile Netzwerksystem mindestens umfasst:
- ein on-board-Netzwerksystem (SMR);
- Funksende- und -empfangsmittel (2), welche es dem besagten on-board-Netzwerksystem erlauben, über Funk eine Kommunikation mit einem Zugangsnetzwerk einzurichten, welches selbst an ein festes öffentliches oder privates Transportnetzwerk verbunden ist, und welche es dem besagten on-board-Netzwerksystem erlauben, sich mit wenigstens einem physischen Zugangspunkt des besagten Informationssystems zu verbinden und den Austausch der Informationsnachrichten zwischen dem on-board-Netzwerksystem und dem festen Informationssystem sicherzustellen; und
- Mittel zum Bilden von Schnittstellen zwischen dem on-board-Netzwerksystem und den Funksende- und -empfangsmitteln,
**dadurch gekennzeichnet, dass** das on-board-Netzwerksystem einen Router (10) umfasst, der ein lokales Netzwerk verwaltet, an das mindestens ein Server (11) und mindestens eine Arbeitsstation (12) mit ihren peripheren Geräten angeschlossen sind, die das Erstellen, das Versenden, den Empfang und das Lesen von Informationsnachrichten ermöglichen.

2. System nach Anspruch 1, **dadurch gekennzeichnet, dass** die Funksende- und
- empfangsmittel einen Funkmodul umfassen, der das Verbinden des mobilen Netzwerksystems über Funk mit einem Zugangsnetzwerk ermöglicht, das durch ein drahtloses Funkkommunikationsnetzwerk gebildet ist, und dass die besagten Funksende- und -empfangs-Schnittstellen-Mittel einen Datenübertragungsport umfassen.

3. System nach einem der Ansprüche 1 und 2, **dadurch gekennzeichnet, dass** die besagten Funksende- und -empfangsmittel ein Mobiltelefon (20₂) umfassen, das den Anschluss des mobilen Netzwerksystems über Funk an ein Zugangsnetzwerk ermöglicht, das durch ein Mobiltelefon-Funkkommunikationssystem gebildet ist, und dass die Mittel zum Bilden von Schnittstellen zwischen dem on-board-Netzwerk und den Funksende-/-empfangsmitteln ein zelluläres Modem (20₁) umfassen, das an den besagten Router angeschlossen ist.

4. System nach einem der Ansprüche 1, 2 und 3, **dadurch gekennzeichnet, dass** die besagten Funksende-/-empfangsmittel ein mobiles Satellitenterminal umfassen, das den Anschluss per Funk an ein Zugangsnetzwerk erlaubt, das durch eine Verbindung mit mindestens einem Satelliten gebildet ist, und dass die besagten Mittel zum Bilden von Schnittstellen mit dem on-board-Netzwerk einen seriellen Ausgangsport umfassen.

5. Verwendung des mobilen Netzwerksystems nach einem der Ansprüche 1 bis 4 zum zeitweiligen Verbinden eines öffentlichen oder eines privaten Firmen-Netzwerks mit einem festen Informationssystem.

## Claims

1. Mobile network system for temporary connection to a fixed information system (Si) of a public network or a private company network, provided with physical access points (AP), said mobile network system comprising at least:
■ an on-board network system (SMR) ;
■ radio transmission/reception means (2) enabling said on-board network system to establish a communication with a radio channel access network, in turn interconnected with a public or private fixed transport network, enabling said on-board network system to be connected to at least one physical access point of said information system and information messages being exchanged between said on-board network system and said fixed information system;
■ interfacing means between said on-board network system and said radio transmission/reception means,
**characterized in that** said on-board network system comprises a router (10) managing a local network to which are connected at least one server (11) and at least one work station (12) fitted with their peripheral elements enabling information messages to be created, sent, received and read.

2. System as claimed in claim 1, **characterised in that** said radio transmission/reception means comprise a radio module enabling said mobile network system to be connected to a radio channel access network via a radio communication network operating on cordless technology and said interfacing means for radio transmission/reception are provided with a data transmission port.

3. System as claimed in claim 1 or 2, **characterised in that** said radio transmission/reception means comprise a cellular mobile terminal (20₂), enabling said mobile network system to be connected to a radio channel access network constituted by a cellular mobile radio communication system, and the interfacing means between the on-board network and the radio transmission/reception means comprise a cellular modem (20₁) connected to said router.

4. System as claimed in claim 1, 2 or 3 **characterised in that** said radio transmission/reception means are a mobile satellite terminal enabling connecting to a radio channel access network via a link having at least one satellite and comprising a serial output port forming said interfacing means with the on-board network.

5. Use of the mobile network system as claimed in one of the preceding claims 1 to 4, for a temporary connection to a fixed information system of a public or a private network.
